# EUROPÄISCHE PATENTSCHRIFT

(11) **EP 3 654 056 B1**
(45) Veröffentlichungstag und Bekanntmachung des Hinweises auf die Patenterteilung: **02.12.2020**
(21) Anmeldenummer: 19204607.6
(22) Anmeldetag: 22.10.2019
(51) Int. Cl.: G01S 7/481, G01S 17/04, G01S 17/08, G01S 17/42, G01S 7/497

(54) **SENSOR UND VERFAHREN ZUR ERFASSUNG VON OBJEKTEN**
SENSOR AND METHOD FOR DETECTING OBJECTS
CAPTEUR ET PROCÉDÉ DE DÉTECTION D'OBJETS

(30) Priorität: 15.11.2018 DE 102018128630
(43) Veröffentlichungstag der Anmeldung: 20.05.2020
(73) Patentinhaber: SICK AG, 79183 Waldkirch (DE)
(72) Erfinder: Fürstenberg, Dr. Kay, 79111 Freiburg (DE); Friedrich, Dr. Lars, 81669 München (DE)

(56) Entgegenhaltungen:
- WO-A1-2019/099166
- DE-U1-202013 105 389
- US-B1- 10 003 168

## Beschreibung

Die Erfindung betrifft einen Sensor und ein Verfahren zur Erfassung von Objekten nach dem Oberbegriff von Anspruch 1 beziehungsweise 13.

Optoelektronische Sensoren gibt es in einem breiten Spektrum, das von eindimensionalen Lichtschranken und Lichttastern über Laserscanner bis zu Kameras reicht. Dabei werden verschiedenste optisch erfassbare Eigenschaften gewonnen. Zwei beispielhafte häufige Anwendungen betreffen die Anwesenheitsfeststellung eines Objekts und die Distanzbestimmung zu einem Objekt. Distanzsensoren nach dem Lichtlaufzeitprinzip messen die Laufzeit eines Lichtsignals, die über die Lichtgeschwindigkeit der Entfernung entspricht. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist.

Wichtige Parameter für derartige Sensoren sind hohe Reichweiten und die Fähigkeit, stark wie schwach remittierende Objekte zu erkennen. Die Spanne zwischen nahen und fernen Objekten, zudem unterschiedlichen Remissionen etwa von glänzenden Flächen bis hinunter zu schwarzem Samt ist erheblich. Es besteht daher ein Bedarf an hochempfindlichen Empfangssystemen, die möglichst schon wenige Photonen detektieren und zudem sehr große Dynamikbereiche von > 100 dB abdecken.

Herkömmlich werden zur Steigerung der Empfindlichkeit in manchen optoelektronischen Sensoren Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist als bei einer einfachen PIN-Diode.

Eine noch größere Empfindlichkeit wird mit Lawinenphotodioden erreicht, die im sogenannten Geiger-Modus betrieben werden (SPAD, Single Photon Avalanche Diode). Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching). Eine SPAD zählt somit wie ein Geigerzähler Einzelereignisse. SPADs sind nicht nur hochempfindlich mit Verstärkungsfaktoren bis zu 10⁶ und mehr, sondern auch vergleichsweise kostengünstig. Zudem lassen sie sich mit wenig Aufwand auf einer Leiterkarte integrieren.

Die hohe Empfindlichkeit ist für auslösende Photonen aus dem zu detektierenden Empfangslicht gewünscht. Allerdings kann auch ein minimales Störereignis, wie ein Fremdlichtphoton oder Dunkelrauschen, das gleiche maximale Empfangssignal erzeugen wie ein Nutzlichtsignal. Eine Maßnahme, um eine größere Robustheit zu erzielen, ist die gemeinsame Auswertung mehrerer SPADs. Die Anzahl der Fremdlicht-Photonen und damit der nur zum Rauschen beitragenden Störereignisse lässt sich auch drastisch reduzieren, indem im Empfangspfad des SPAD-Empfängers ein auf den Wellenlängenbereich des Nutzlichts abgestimmtes Bandpassfilter angeordnet wird.

Problematisch dabei ist, dass die Wellenlänge des Nutzlichts Driften unterliegt. Im besonders häufigen Fall eines eigenen Lichtsenders ist dessen Wellenlänge unter anderem von der Temperatur abhängig. Durch solche Driften passt die Wellenlänge nicht mehr zum Filter, und das Nutzlicht kann das Filter nicht mehr ausreichend passieren. Aus diesem Grund darf der Durchlassbereich des Bandpassfilters nicht zu schmal werden, womit aber auch die Unterdrückung des Fremdlichts begrenzt ist.

Für die Spektralanalyse werden Filteranordnungen mit Filterbereichen eingesetzt, die auf unterschiedliche Wellenlängenbereiche abgestimmt sind. Ein solches Filter wird nicht in einem optoelektronischen Sensor zur Erfassung von Objekten oder gar Abstandsmessung eingesetzt und würde auch in Bezug auf die Fremdlichtempfindlichkeit nicht unmittelbar helfen: Durchdringt das Empfangslicht alle Filterbereiche, so entspricht das Resultat einem Filter mit kombiniertem Durchlassbereich der Filterbereiche und gegenüber einem einheitlichen Filter mit diesem Durchlassbereich bei nur verschlechterter Transmissionseffizienz. Wird das Empfangslicht auf einen Filterbereich eingegrenzt, so sind die übrigen Filterbereiche ungenutzt und überflüssig. Das Problem, dass der jeweilige effektive Durchlassbereich breit zu wählen ist, um Wellenlängendriften aufzufangen, und daher Fremdlicht nicht ausreichend unterdrückt, bleibt in jedem Fall bestehen.

Die US 6 154 474 B1 offenbart eine Regelungsvorrichtung für die optische Wellenlänge einer Laserdiode in der optischen Faserkommunikation. Die Temperatur der Laserdiode wird über ein Peltierelement angepasst. Das Sendelicht wird in einem Regelkreis durch ein optisches Hochpassfilter und ein optisches Tiefpassfilter geführt, so dass je nach Richtung und Ausmaß der Abweichung der Wellenlänge ein Steuersignal für das Peltierelement entsteht. Ein zusätzliches Bandpassfilter soll verhindern, dass bei extremen Änderungen der Wellenlänge in einen von dem Hoch- und Tiefpassfilter nicht mehr abgedeckten Bereich kein unkontrollierbarer Zustand entsteht.

Die US 6 529 534 B1 beschreibt einen weiteren Regelschaltkreis für die Wellenlänge eines Lasersignals, um durch stabile Wellenlänge möglichst viele Kanäle in der optischen Kommunikation zu ermöglichen. Dabei wird eine Regelung ähnlich derjenigen der US 6 154 474 B1 mit einer zweiten Regelung kombiniert, welche auf einer Temperaturmessung basiert.

Aus der DE 20 2013 105 389 U1 ist ein optoelektronischer Sensor mit im Geiger-Modus betriebenen Lawinenphotodiodenelementen bekannt. In dessen Auswertungsstrukturen kann eine Empfangssignalaufbereitungseinheit vorgesehen sein, die unter anderem ein Frequenzfilter aufweist. Außerdem ist optional ein Referenzkanal vorgesehen, mit dem die Funktion des Lichtsenders geprüft wird, ein Amplitudenverhältnis zwischen Mess- und Referenzkanal verglichen wird oder bei einem Lichtlaufzeitverfahren die schwankenden internen Signallaufzeiten ausgeglichen werden.

Die US 10 003 168 B1 offenbart einen Faserlaser für den Einsatz in einem LIDAR-System. In dem Laser können ein oder mehrere Bandpassfilter mit einem Passband zwischen 0,1 nm und 10 nm eingesetzt sein. Weiterhin kann der Laser eine Temperaturstabilisierung aufweisen, um die Arbeitswellenlänge innerhalb des Passbandes zu halten.

Es ist daher Aufgabe der Erfindung, die Messgenauigkeit eines gattungsgemäßen Sensors zu verbessern.

Diese Aufgabe wird durch einen Sensor und ein Verfahren zur Erfassung von Objekten nach Anspruch 1 beziehungsweise 13 gelöst. Der Sensor weist einen Lichtempfänger, eine Empfangsoptik mit einem ersten optischen Filter und eine Steuer- und Auswertungseinheit auf. Der Lichtempfänger ist ein SPAD-Lichtempfänger mit Lawinenphotodiodenelementen, die jeweils mit einer Vorspannung oberhalb einer Durchbruchspannung vorspannbar und somit in einem Geiger-Modus betreibbar sind. Damit Nutz-oder Empfangslicht mit einem spezifizierten Wellenlängenbereich erfasst wird, ist das Filter auf diesen Wellenlängenbereich abgestimmt. Die Steuer- und Auswertungseinheit gewinnt aus dem Empfangssignal des Lichtempfängers Messinformationen über Objekte in dem Überwachungsbereich, wie einen Abstand zu dem Objekt oder die Feststellung, ob ein Objekt anwesend ist oder nicht, insbesondere mit bestimmten Eigenschaften oder an bestimmter Position.

Der spezifizierte Wellenlängenbereich des Empfangslichts gilt für bestimmte Umgebungsbedingungen und unterliegt daher Driften, wobei besonders die Temperatur ein Einflussfaktor ist. Der Sensor ist für bestimmte Umgebungsbedingungen ausgelegt, etwa einen spezifizierten Temperaturbereich. Deshalb lässt sich ein Toleranzwellenlängenbereich angeben, der diejenigen Wellenlängen des Empfangslichts umfasst, die aufgrund von Driften im Betrieb des Sensors auftreten.

Die Erfindung geht von den Grundgedanken aus, ein unüblich eng ausgelegtes Filter einzusetzen, um besonders viel Fremdlicht zu unterdrücken. Der Durchlassbereich wird dabei schmaler gewählt als der Toleranzwellenlängenbereich. Durch die besonders hohe Selektivität wird der Sensor der besonderen Natur der Lawinenphotodiodenelemente im Geiger-Modus mit ihrer starken Reaktion auf Fremdlichtereignisse gerecht. Ein herkömmliches Filter würde den Toleranzwellenlängenbereich abdecken, d.h. der Durchlassbereich des Filters würde mit dem Toleranzwellenlängenbereich übereinstimmen oder größer sein. Der Durchlassbereich des erfindungsgemäßen ersten Filters ist so eng, dass auf den ersten Blick die zu erwartenden Driften das Nutzlicht mindestens teilweise in den Sperrbereich verschieben, und das erscheint zunächst sogar kontraproduktiv. Dieser Effekt wird aber durch die in verschiedenen Ausführungsformen erläuterten Maßnahmen aufgefangen.

Die Erfindung hat den Vorteil, dass das Verhältnis von Nutzsignal zu Fremdlicht signifikant erhöht wird. Die besondere Fremdlichtempfindlichkeit von SPADs wird kompensiert. Das verbesserte Signal-Rausch-Verhältnis kann einer genaueren Messung dienen, oder es ermöglicht höhere Reichweiten oder den Einsatz leistungsschwächerer und daher kostengünstigerer Lichtquellen.

Das erste Filter ist bevorzugt ein schmalbandiges Bandpassfilter. Der Durchlassbereich lässt sich demnach durch eine untere und obere Grenze oder alternativ eine Mittenfrequenz angeben, um die der Durchlassbereich meist in etwa symmetrisch liegt. Ein Bandpassfilter ist besonders geeignet, Fremdlicht zu unterdrücken, indem es Licht sowohl zu kleiner als auch zu großer Wellenlängen ausschließt.

Die Empfangsoptik weist I erfindungsgemäß ein weiteres optisches Filter auf, dessen Durchlassbereich schmaler ist als der Toleranzwellenlängenbereich. Besonders bevorzugt umfassen die Durchlassbereiche der Filter insgesamt den Toleranzwellenlängenbereich. Es kann auch eine Vielzahl von weiteren optischen Filtern jeweils mit Durchlassbereich schmaler als der Toleranzwellenlängenbereich sein, so dass dann jeder einzelne Durchlassbereich noch schmaler bleibt und dennoch insgesamt der Toleranzwellenlängenbereich abgedeckt ist. Eine Überlappung der Durchlassbereiche ist möglich.

Den Filtern ist bevorzugt jeweils mindestens ein Lawinenphotodiodenelement zugeordnet. Das zugeordnete Lawinenphotodiodenelement empfängt dabei den Teil des Empfangslichts, der gerade dieses Filter passiert hat. Anders ausgedrückt kann das Empfangslicht als in Teillichtbündel aufgeteilt aufgefasst werden, die jeweils durch ein bestimmtes Filter auf ein bestimmtes Lawinenphotodiodenelement oder eine bestimmte Gruppe von Lawinenphotodiodenelementen fallen. Eine Gruppe von Lawinenphotodiodenelementen, die demselben Filter zugeordnet ist, dient der gemeinsamen Auswertung, um durch Summensignale oder statistische Betrachtung die noch vorhandenen Fremdlicht- und Dunkelereignisse auszugleichen.

Die Steuer- und Auswertungseinheit ist bevorzugt dafür ausgebildet, das Empfangssignal desjenigen mindestens einen Lawinenphotodiodenelements zu selektieren, das dem Filter zugeordnet ist, dessen Durchlassbereich bei den aktuellen Betriebsbedingungen dem Wellenlängenbereich des Empfangslichts entspricht. Wenn sich der Wellenlängenbereich des Empfangslichts durch Driften verschiebt, wird dennoch eines der Filter den passenden schmalen Durchlassbereich anbieten, und das mindestens eine diesem Filter zugeordnete Lawinenphotodiodenelement erhält ein Nutzlichtsignal ohne jegliches Fremdlicht außerhalb des Wellenlängenbereichs des Nutzlichts. Die sonstigen Lawinenphotodiodenelemente liegen hinter einem Filter mit nicht an den Wellenlängenbereich des Nutzlichts angepasstem Durchlassbereich und tragen daher viel oder sogar nur Fremdlicht bei. Die Steuer- und Auswertungseinheit ignoriert deshalb deren Signalbeitrag.

Die Steuer- und Auswertungseinheit selektiert bevorzugt das Empfangssignal des mindestens einen Lawinenphotodiodenelements anhand von dessen Pegel oder einer Temperaturinformation. Das mindestens eine Lawinenphotodiodenelement hinter dem aktuell an die Wellenlänge des Nutzlichts angepassten Filter wird in aller Regel das stärkste oder zumindest eines der stärksten Signale liefern. Falls aus den aktuellen Pegeln der jeweiligen einem Filter zugeordneten Lawinenphotodiodenelemente keine eindeutige Entscheidung möglich ist, kann auch eine Historie herangezogen werden. Driften der Wellenlänge sind üblicherweise kein plötzlicher, sondern ein langsamer und kontinuierlicher Prozess. Daher ist das bisher selektierte mindestens eine Lawinenphotodiodenelement ein guter Kandidat auch für die aktuelle Situation, und ansonsten kommen insbesondere diejenigen Lawinenphotodiodenelemente in Betracht, deren Filter zur bisherigen Selektion Filter spektral benachbart ist. Ein weiteres denkbares Kriterium ist die Betriebstemperatur insbesondere an einem eigenen Lichtsender, die maßgeblich Einfluss auf die Verschiebung der Wellenlänge nimmt. So kann beispielsweise mit einer Umrechnungstabelle (LUT, Lookup Table) zur aktuell gemessenen Temperatur das passende Filter und damit mindestens ein Lawinenphotodiodenelement aufgefunden werden.

Erstes Filter und weitere Filter bilden bevorzugt ein Streifenmuster oder ein Karomuster. Das sind einfache Muster, welche die Herstellung der Filter vereinfachen, und sie ergeben klar getrennte Bereiche auf dem Lichtempfänger, mit denen Filter und Lawinenphotodiodenelemente einander zugeordnet werden können.

Der Sensor weist bevorzugt einen Lichtsender auf, um Sendelicht in dem Wellenlängenbereich in den Überwachungsbereich auszusenden. Der Lichtsender erzeugt vorzugsweise Licht in einem engen Wellenlängenbereich, und das ist dann der empfangsseitig erwartete Wellenlängenbereich, der sich aber wie erläutert durch Driften verschieben kann.

Der Sensor weist bevorzugt einen Referenzlichtempfänger mit einem optischen Referenzfilter auf, dessen Durchlassbereich demjenigen des ersten Filters entspricht, um eine Driftinformation zu gewinnen, inwieweit sich der Wellenlängenbereich des Sendelichts aufgrund von Driften verschoben hat. Dadurch kennt die Steuer- und Auswertungseinheit den aktuellen, durch Driften verschobenen Wellenlängenbereich. Anhand dessen können beispielsweise das passende Filter und dementsprechend ein das Nutzsignal bereitstellende mindestens eine Lawinenphotodiodenelement selektiert werden. Die Driftinformation ist insbesondere ein Pegel.

Die Steuer- und Auswertungseinheit ist bevorzugt dafür ausgebildet, den Wellenlängenbereich des Sendelichts anhand der Driftinformation in den Durchlassbereich zu regeln. Dazu wird der Wellenlängenbereich so verschoben, dass sich der Pegel am Referenzlichtempfänger maximiert. Dies ist keine einfache Temperaturregelung, die lediglich eine Betriebstemperatur festhalten würde, sondern es wird tatsächlich die Wellenlänge geregelt, worin beispielsweise auch Temperaturverschiebungen der Filter berücksichtigt sind. Die Regelung des Sendelichts verhindert letztlich Driften und unterscheidet sich damit von den bisher erläuterten Ansätzen, die an der Empfangsseite ansetzen und auf die Driften reagieren.

Der Lichtsender weist vorzugsweise ein Temperaturanpassungselement auf, mit dem der Wellenlängenbereich des Sendelichts verändert werden kann. Der Wellenlängenbereich des Lichtsenders wird also gegen mit dem Referenzlichtempfänger erfassten Driften über eine Temperaturanpassung zurückverschoben. Beispielhafte Ausführungen des Temperaturanpassungselements sind ein Peltierelement oder eine Anpassung des Laserstroms.

Die Steuer- und Auswertungseinheit ist bevorzugt dafür ausgebildet, eine Lichtlaufzeit des von dem Lichtsender ausgesandten und von dem Lichtempfänger aus dem Überwachungsbereich als Empfangslicht wieder empfangenen Sendelichts zu bestimmen. Damit wird als Messinformation über das Objekt dessen Abstand bestimmt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors mit einem optischen Mehrfachfilter, dessen Filterbereiche mit sehr schmalen, gestaffelten Durchlassbereichen verschiedenen Lawinenphotodiodenelementen zugeordnet sind;
- Fig. 2: eine schematische Darstellung eines optoelektronischen Sensors mit Referenzlichtempfänger und Temperaturanpassungselement zur Regelung des Wellenlängenbereichs des Sendelichts;
- Fig. 3: eine schematische Darstellung eines Laserscanners, der ein Filter wie in Figur 1 einsetzt; und
- Fig. 4: eine schematische Darstellung eines Laserscanners, der eine Regelung wie in Figur 2 einsetzt.

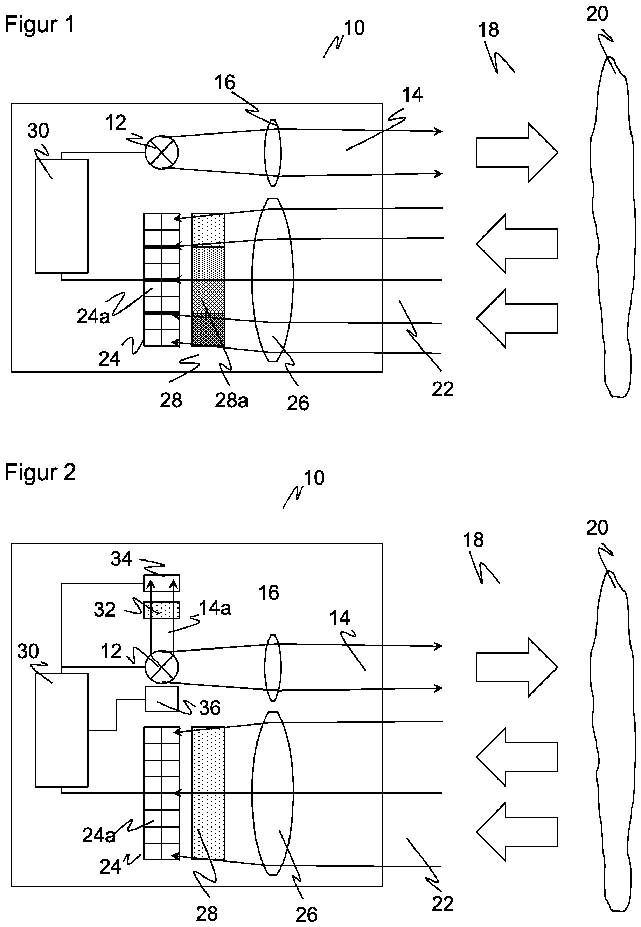

Figur 1 zeigt eine vereinfachte schematische Blockdarstellung eines optoelektronischen Sensors 10 in einer Ausführungsform als einstrahliger Lichttaster. Ein Lichtsender 12, vorzugsweise mit scharf eingegrenztem Wellenlängenbereich wie eine Laserlichtquelle, erzeugt Sendelicht 14, das von einer rein beispielhaft als Einzellinse dargestellten Sendeoptik 16 gebündelt oder kollimiert und so in einen Überwachungsbereich 18 ausgesandt wird.

Trifft das Sendelicht 14 dort auf ein Objekt 20, so wird ein Teil zurückgeworfen und kehrt, überlagert mit von dem Sendelicht 14 unabhängigen Fremdlichtanteilen, als Empfangslicht 22 zu dem Sensor 10 zurück. Dort wird es über eine Empfangsoptik auf einen Lichtempfänger 24 geführt. Die Empfangsoptik umfasst beispielsweise strahlformende Elemente, hier vereinfachend als Einzellinse 26 dargestellt sowie ein optisches Filter 28, dessen Durchlassbereich in einer sogleich noch genauer zu beschreibenden Weise an den Wellenlängenbereich des Lichtsenders 12 angepasst ist. Die Empfangssignale der Lichtempfangselemente 24a werden von einer Steuer- und Auswertungseinheit 30 ausgelesen und dort ausgewertet.

Der Lichtempfänger 24 weist eine Vielzahl von Lichtempfangselementen 24a auf, die als Lawinenphotodioden im Geigermodus oder SPADs ausgebildet sind. Grundsätzlich wären auch andere Lichtempfangselemente 24a denkbar, die auch diskret statt gemeinsam zu einer Linien- oder Matrixanordnung ausgeführt sein könnten.

Das Filter 28 weist mindestens zwei, allgemein n und hier rein beispielhaft vier Filterbereiche 28a auf. Das gezeigte Streifenmuster ist vorteilhaft, kann aber auch variiert werden, beispielsweise als Karomuster oder Ähnliches. Die Filterbereiche 28a unterscheiden sich voneinander in ihrem Durchlassbereich. Dabei ergänzen die Durchlassbereiche einander, unter möglicher Teilüberlappung, zu einem größeren Durchlassbereich. Beispielsweise ist jeder Filterbereich 28a ein Bandpassfilter mit schmalem Durchlassbereich zumindest in etwa gleicher Breite, wobei die Mittenfrequenzen von Filterbereich 28a zu Filterbereich 28a ansteigen.

Unter idealen Bedingungen könnte bereits ein einziger Filterbereich 28a extrem schmalbandig auf den Wellenlängenbereich des Lichtsenders 12 abgestimmt sein. Da aber dieser Wellenlängenbereich im Betrieb Driften unterliegt, vor allem aufgrund von Temperatureinflüssen, würde die Übereinstimmung zu vielen Zeiten nicht passen. Das Ergebnis wäre, dass der Filterbereich 28a entgegen seiner Bestimmung Nutzlicht blockiert. Deshalb wird herkömmlich ein breiterer Durchlassbereich gewählt, hier als Toleranzwellenlängenbereich bezeichnet, in dem auch noch der driftende Wellenlängenbereich liegt.

Die erfindungsgemäßen Filterbereiche 28a haben aber einen schmaleren Durchlassbereich als den Toleranzwellenlängenbereich. Insbesondere teilen sich die Filterbereiche den Toleranzwellenlängenbereich in etwa gleichmäßig auf, so dass jeder einzelne Durchlassbereich so breit ist wie 1/n des Toleranzwellenlängenbereichs. Dann verschiebt sich der Wellenlängenbereich im Betrieb des Sensors 10 immer noch aus dem Durchlassbereich eines individuellen Filterbereichs 28a, jedoch zugleich in den Durchlassbereich eines anderen Filterbereichs 28a hinein.

Somit blockiert das Filter 28 insgesamt an vielen Stellen das Nutzlicht, nämlich den aktuell aufgrund von Driften nicht passenden Filterbereichen 28a, lässt es aber lokal begrenzt an mindestens einem Filterbereich 28a unter scharfer Beschneidung von Fremdlicht passieren.

Andererseits ist der Lichtempfänger 24 in die Vielzahl von Lichtempfangselementen 24a unterteilt, auf die jeweils nur Licht eines zugeordneten Filterbereichs 28a fällt. Somit umfasst der Lichtempfänger 24 so viele Gruppen mit mindestens einem Lichtempfangselement 24a wie Filterbereiche 28a, und jeweils eine dieser Gruppen erhält ein starkes Nutzsignal mit wenig Fremdlicht, während sich das Signal-Rauschverhältnis für die übrigen Gruppen durch das den schlecht an die aktuelle Drift angepassten Durchlassbereich des zugeordneten Filterbereichs 28a sogar verschlechtert.

Die Steuer- und Auswertungseinheit 30 selektiert nun jeweils die Gruppe mit dem starken Nutzsignal und ignoriert die Signale der übrigen Gruppen, um ein Empfangssignal mit zwar insgesamt verringertem Pegel, dafür aber deutlich besserem Signal-Rauschverhältnis zu erhalten. Der geringe Pegel ist angesichts der hohen Empfindlichkeit im Geiger-Modus gut zu verkraften. Die Selektion kann häufig einfach über den stärksten Pegel aller Gruppen erfolgen, zumindest solange das Sendelicht 14 nicht von Fremdlicht in benachbarten Spektralbereichen dominiert wird, und in einem solchen Fall wären die Messbedingungen für jeden Sensor ausgesprochen ungünstig. Die Steuer- und Auswertungseinheit kann aber außerdem eine Historie heranziehen, da die Driften keine zufälligen Sprünge des Wellenlängenbereichs verursachen, sondern nachvollziehbar über spektral benachbarte Filterbereiche 28a wechseln.

Das so gewonnene Empfangssignal kann auf vielfältige Weise ausgewertet werden. In einer bevorzugten Ausführungsform ist der Sensor 10 entfernungsmessend. Dann bestimmt die Steuer- und Auswertungseinheit 30 eine Lichtlaufzeit des Sendelichts 14 bis zum Empfang des Empfangslichts 22 und rechnet dies über die Lichtgeschwindigkeit in einen Abstand um.

Der Sensor 10 weist in einer praktischen Ausführungsform weitere Elemente auf, insbesondere weitere Elektronik sowie verschiedene Anschlüsse, auf die hier vereinfachend nicht eingegangen wird. Die Auftrennung in Lichtempfänger 24 und Steuer- und Auswertungseinheit 30 in Figur 1 ist auch in der Praxis denkbar, dient aber in erster Linie der Erläuterung. Vorzugsweise werden diese Elemente zumindest teilweise auf einem gemeinsamen Chip integriert, dessen Fläche sich lichtempfindliche Bereiche der Lawinenphotodioden und einzelnen oder Gruppen von Lawinenphotodioden zugeordnete Schaltkreise zu deren Auswertung und Ansteuerung teilen. Sämtliche Bauteile können kompakt in einem Sensor 10 und insbesondere in einem Gehäuse untergebracht werden.

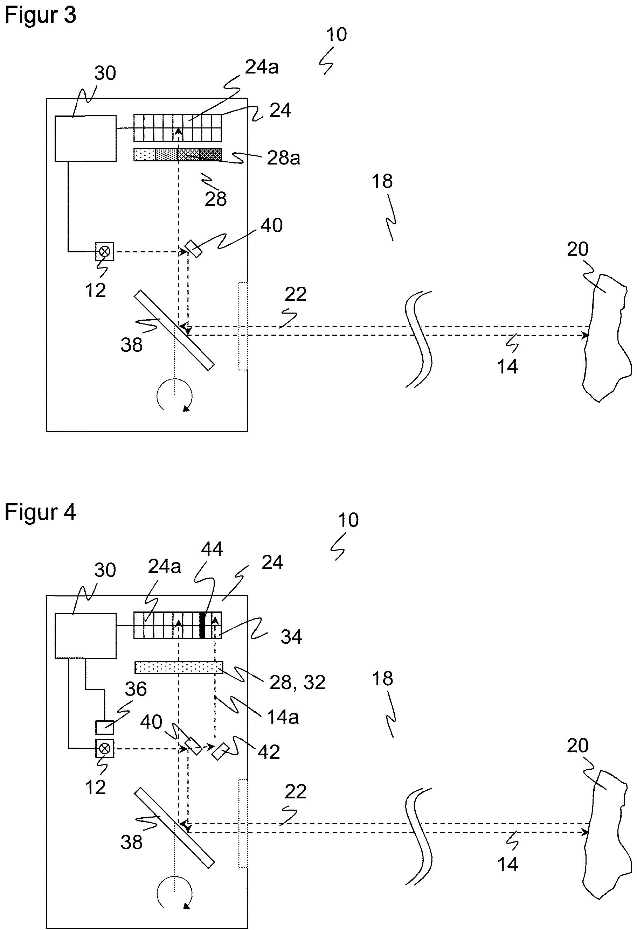

Die dargestellte Ausführung des Sensors 10 als biaxialer, eindimensionaler Taster ist nur ein Beispiel. Zum einen kann der Lichtsender 12 auch koaxial zum Empfangspfad angeordnet werden, sei es durch Teilerspiegel oder indem der Lichtsender 12 im Empfangspfad angeordnet wird. Außerdem lässt sich der Überwachungsbereich 18 erweitern, um einen 2D- oder sogar 3D-Sensor zu erhalten. So können mehrere einstrahlige Systeme kombiniert werden, um ein tastendes Lichtgitter mit mehreren, meist parallelen Strahlen zu bilden, welches in jedem Strahl Entfernungen misst oder überwacht. Weiterhin kommen Scanmechanismen mit mechanischer Scanbewegung in Frage, wie dies weiter unten anhand der Figuren 3 und 4 noch vorgestellt wird, aber auch sogenannte Solid-State-Scanner ohne bewegte mechanische Teile, die stattdessen zur Ablenkung des Scanstrahls MEMS-Spiegel, Optical Phased Arrays, akustooptische Modulatoren, elektro-optische Modulatoren und dergleichen einsetzen. Eine weitere Möglichkeit ist, für eine Ortsauflösung des Lichtempfängers 24 zu sorgen. Dazu wird praktisch die Anordnung von Lichtempfangselementen 24a und Filterbereichen 28a als ein Makropixel aufgefasst und dieses in einer Richtung zu einer Zeile oder in zwei Richtungen zu einer Fläche vervielfacht. Schließlich ist auch denkbar, dass der Sensor 10 gar keinen eigenen Lichtsender 12 besitzt, sei es weil ein kooperierender Lichtsender gegenüber angebracht ist wie in einer Lichtschranke oder weil das Empfangslicht 22 von irgendeiner anderen spektral begrenzten Lichtquelle stammt.

Figur 2 zeigt eine schematische Blockdarstellung einer weiteren Ausführungsform des optoelektronischen Sensors 10. Dabei bezeichnen die gleichen Bezugszeichen gleiche oder einander entsprechende Merkmale.

Im Unterschied zu der Ausführungsform gemäß Figur 1 weist nun das Filter 28 nur einen einzigen Filterbereich auf, der aber weiterhin schmalbandiger als der Toleranzwellenlängenbereich ausgelegt ist. Zum Ausgleich von Driften wird stattdessen der Wellenlängenbereich des Lichtsenders 12 geregelt. Dazu ist ein Referenzpfad mit einem Referenzfilter 32 und einem Referenzlichtempfänger 34 vorgesehen, in den ein Teil 14a des Sendelichts 14 ausgekoppelt wird. Das Referenzfilter 32 kann mit dem Filter 28 vergleichbare Charakteristiken haben, sorgt aber jedenfalls dafür, dass bei driftender Wellenlänge des Sendelichts 14 durch den Referenzlichtempfänger 34 eine entsprechende Driftinformation erfasst wird.

Die Steuer- und Auswertungseinheit 30 regelt nun anhand der Driftinformation des Referenzlichtempfängers 34 den Wellenlängenbereich des Lichtsenders 12, so dass dieser innerhalb eines spezifizierten Bandes bleibt. Dazu wird mit Hilfe eines Temperaturanpassungselements 36 auf die Temperatur des Lichtsenders 12 eingewirkt. Zwei beispielhafte Ausführungsformen des Temperaturanpassungselements sind ein PeltierElement und eine Stromanpassung des Stroms durch den Lichtsender 12. Aufgrund der Regelung liegt der extrem schmale Durchlassbereich des Filters 28 immer nahe an dem tatsächlichen Wellenlängenbereich des Sendelichts 14 und lässt daher zumindest nahezu alles Nutzlicht passieren, obwohl Fremdlicht mit sehr scharfen, nahen spektralen Grenzen abgeschnitten wird.

In einer Mischform wird das mehrteilige Filter 28 mit mehreren Filterbereichen 28a aus Figur 1 anstelle des einteiligen Filters 28 in Figur 2 eingesetzt. Dadurch kann beispielsweise die sendeseitige Regelung gröber bleiben, weil zusätzlich noch exklusiv der passende Filterbereich 28a beziehungsweise das mindestens eine diesem zugeordnete Lawinenphotodiodenelement 24a selektiert wird. Umgekehrt ist auch denkbar, für die Filterbereiche 28a noch schmalere Durchlassbereiche zu wählen, weil aufgrund der sendeseitigen Regelung das Ausmaß der verbleibenden Driften deutlich geringer geworden ist. Eine weitere denkbare Mischform nutzt nur den Referenzpfad 14, 32, 34 der Figur 2 in Figur 1, um das Signal des Referenzlichtempfängers für die Selektion des Filterbereichs 28a beziehungsweise des zugeordneten mindestens einen Lawinenphotodiodenelements zu verwenden.

Figur 3 zeigt einen Laserscanner als weitere Ausführungsform des optoelektronischen Sensors 10. Das Sendelicht 14 und das Empfangslicht 22 werden hier mit Hilfe eines Drehspiegels 38 periodisch durch den Überwachungsbereich 18 geführt, um eine Ebene abzuscannen. Im Sendepfad ist eine weitere Ablenkeinheit 40 vorgesehen, um das Sendelicht 14 auf den Drehspiegel 38 zu lenken. Die strahlformenden Optiken 16, 26 sind nur der Übersicht halber weggelassen und in der Praxis durchaus vorgesehen. Das Messprinzip ist ansonsten je fiktiv betrachteter fester Drehstellung dasjenige, das zu Figur 1 erläutert wurde, und die dabei gewonnenen Messpunkt ergeben insgesamt eine Punktwolke entsprechend der angetasteten Kontur in der abgescannten Ebene.

Figur 4 zeigt einen Laserscanner, der nicht wie Figur 3 das Messprinzip der Figur 1, sondern nun das Messprinzip der Figur 2 verwirklicht. Dazu wird der einfache kleine Spiegel, der in Figur 3 als weitere Ablenkeinheit 40 das Sendelicht 14 auf den Drehspiegel 38 lenkt, nun durch einen Teilerspiegel ersetzt. Dadurch wird ein Teil 14a des Sendelichts 14 transmittiert und erreicht direkt über einen weiteren Spiegel 42 und durch einen bestimmten Teilbereich des Filters 28 einen bestimmten Teilbereich des Lichtempfängers 24. Dadurch fungieren Filter 28 und Lichtempfänger 24 durch die genannten Teilbereiche in einer Doppelfunktion zugleich als Referenzfilter 32 und als Referenzlichtempfänger 34. Der dadurch aufgebaute Referenzpfad kann wie in Figur 2 zur Regelung des Wellenlängenbereichs des Lichtsenders 12 genutzt werden.

In der dargestellten Ausführungsform werden einige Lichtempfangselemente 24a des Lichtempfängers 24 als Referenzlichtempfänger genutzt. Es ist vorteilhaft, dazwischen eine optische Barriere 44 vorzusehen, um optisches Übersprechen oder Eigenblendung zu verhindern. Alternativ kann auch ein separater Referenzlichtempfänger 34 eingesetzt werden, ebenso ein separates Referenzfilter 32.

Es sind zahlreiche abweichende Aufbauten von Laserscannern möglich, beispielsweise mit einem drehbaren Polygonspiegelrad oder einem insgesamt drehenden Messkopf mit Lichtsender 12 und/oder Lichtempfänger 24. Durch zusätzliche Bewegung in Elevation oder mehrere in Elevation versetzte Abtaststrahlen kann auch ein 3D-Scanner realisiert werden.

## Patentansprüche

1. Optoelektronischer Sensor (10) zur Erfassung von Objekten (20) in einem Überwachungsbereich (18), der zum Empfangen von Empfangslicht (22) aus dem Überwachungsbereich (18) in einem Wellenlängenbereich einen Lichtempfänger (24) mit einer Vielzahl von Lawinenphotodiodenelementen (24a), die jeweils mit einer Vorspannung oberhalb einer Durchbruchspannung vorspannbar und somit in einem Geiger-Modus betreibbar sind, eine Empfangsoptik (26, 28) mit einem ersten optischen Filter (28, 28a), das auf den Wellenlängenbereich abgestimmt ist, sowie eine Steuer- und Auswertungseinheit (30) aufweist, wobei die Steuer- und Auswertungseinheit dafür ausgebildet ist, aus einem Empfangssignal des Lichtempfängers (24) Informationen über die Objekte (20) zu erfassen, wobei sich der Wellenlängenbereich in einem Toleranzwellenlängenbereich verschiebt, wobei der Toleranzwellenlängenbereich den im Betrieb des Sensors (10) Driften unterliegenden Wellenlängenbereich umfasst,
**dadurch gekennzeichnet,**
**dass** das erste Filter (28, 28a) einen Durchlassbereich aufweist, der schmaler ist als der Toleranzwellenlängenbereich und dass die Empfangsoptik (26, 28) mindestens ein weiteres optisches Filter (28a) aufweist, dessen Durchlassbereich schmaler ist als der Toleranzwellenlängenbereich und sich von dem Durchlassbereich des ersten Filters unterscheidet.

2. Sensor (10) nach Anspruch 1,
wobei das erste Filter (28, 28a) ein schmalbandiges Bandpassfilter ist.

3. Sensor (10) nach Anspruch 1 oder 2, wobei die Durchlassbereiche der Filter (28a) insgesamt den Toleranzwellenlängenbereich umfassen.

4. Sensor (10) nach Anspruch 3,
wobei den Filtern (28a) jeweils mindestens ein Lawinenphotodiodenelement (24a) zugeordnet ist.

5. Sensor (10) nach Anspruch 4,
wobei die Steuer- und Auswertungseinheit (30) dafür ausgebildet ist, das Empfangssignal desjenigen mindestens einen Lawinenphotodiodenelements (24a) zu selektieren, das dem Filter (28a) zugeordnet ist, dessen Durchlassbereich bei den aktuellen Betriebsbedingungen dem Wellenlängenbereich des Empfangslichts (22) entspricht.

6. Sensor (10) nach Anspruch 5,
wobei die Steuer- und Auswertungseinheit (30) Empfangssignale des mindestens einen Lawinenphotodiodenelements (24a) anhand von dessen Pegel oder einer Temperaturinformation selektiert.

7. Sensor (10) nach einem der Ansprüche 3 bis 6,
wobei ein erstes Filter (28, 28a) und weitere Filter (28a) ein Streifenmuster oder ein Karomuster bilden.

8. Sensor (10) nach einem der vorhergehenden Ansprüche,
der einen Lichtsender (12) aufweist, um Sendelicht (14) in dem Wellenlängenbereich in den Überwachungsbereich (18) auszusenden.

9. Sensor (10) nach Anspruch 8,
der einen Referenzlichtempfänger (34) mit einem optischen Referenzfilter (32) aufweist, dessen Durchlassbereich demjenigen des ersten Filters (28, 28a) entspricht, um eine Driftinformation zu gewinnen, inwieweit sich der Wellenlängenbereich des Sendelichts (14) aufgrund von Driften verschoben hat.

10. Sensor (10) nach Anspruch 9,
wobei die Steuer- und Auswertungseinheit (30) dafür ausgebildet ist, den Wellenlängenbereich des Sendelichts (12) anhand der Driftinformation in den Durchlassbereich zu regeln.

11. Sensor (10) nach einem der Ansprüche 8 bis 10,
wobei der Lichtsender (12) ein Temperaturanpassungselement (36) aufweist, mit dem der Wellenlängenbereich des Sendelichts (14) verändert werden kann.

12. Sensor (10) nach einem der vorhergehenden Ansprüche,
wobei die Steuer- und Auswertungseinheit (30) dafür ausgebildet ist, eine Lichtlaufzeit des von dem Lichtsender (12) ausgesandten und von dem Lichtempfänger (24) aus dem Überwachungsbereich (18) als Empfangslicht (22) wieder empfangenen Sendelichts (14) zu bestimmen.

13. Verfahren zur Erfassung von Objekten (20) in einem Überwachungsbereich (18), bei dem ein Lichtempfänger (24) mit einer Vielzahl von Lawinenphotodiodenelementen (24a), die jeweils mit einer Vorspannung oberhalb einer Durchbruchspannung vorgespannt und somit in einem Geiger-Modus betrieben werden, Empfangslicht (22) aus dem Überwachungsbereich (18) in einem Wellenlängenbereich durch eine Empfangsoptik (26, 28) mit einem ersten optischen Filter (28, 28a) empfängt, das auf den Wellenlängenbereich abgestimmt ist, wobei durch Auswertung (30) eines Empfangssignals des Lichtempfängers (24) Informationen über die Objekte (20) erfasst werden, wobei sich der vorgegebene Wellenlängenbereich in einem Toleranzwellenlängenbereich verschiebt, und wobei der Toleranzwellenlängenbereich den Driften unterliegenden Wellenlängenbereich umfasst,
**dadurch gekennzeichnet,**
**dass** das erste Filter (28, 28a) nur Empfangslicht (22) in einem Durchlassbereich passieren lässt, der schmaler ist als der Toleranzwellenlängenbereich und dass die Empfangsoptik (26, 28) mindestens ein weiteres optisches Filter (28a) aufweist, dessen Durchlassbereich schmaler ist als der Toleranzwellenlängenbereich und sich von dem Durchlassbereich des ersten Filters unterscheidet.

## Claims

1. An optoelectronic sensor (10) for detecting objects (20) in a monitored area (18), the optoelectronic sensor (10) comprising, for receiving received light (22) from the monitored area (18) in a wavelength range, a light receiver (24) having a plurality of avalanche photodiode elements (24a), each of which can be biased with a bias voltage above a breakdown voltage and can thus be operated in a Geiger mode, receiving optics (26, 28) having a first optical filter (28), 28a) tuned to the wavelength range, and a control and evaluation unit (30) configured to detect information about the objects (20) from a received signal of the light receiver (24), the wavelength range shifting within a tolerance wavelength range, the tolerance wavelength range comprising the wavelength range which is subject to drift during operation of the sensor (10),
**characterized in that** the first filter (28, 28a) has a transmission range which is narrower than the tolerance wavelength range and **in that** the receiving optics (26, 28) have at least one further optical filter (28a) whose transmission range is narrower than the tolerance wavelength range and is different from the transmission range of the first filter.

2. The sensor (10) according to claim 1,
wherein the first filter (28, 28a) is a narrow bandpass filter.

3. The sensor (10) according to claim 1 or 2,
where the transmission ranges of the filters (28a) together cover the tolerance wavelength range.

4. The sensor (10) according to claim 3,
wherein at least one avalanche photodiode element (24a) is assigned to each of the filters (28a).

5. The sensor (10) according to claim 4,
wherein the control and evaluation unit (30) is configured to select the received signal of that at least one avalanche photodiode element (24a) which is associated with the filter (28a) whose transmission range corresponds to the wavelength range of the received light (22) under the current operating conditions.

6. The sensor (10) according to claim 5,
wherein the control and evaluation unit (30) selects received signals of the at least one avalanche photodiode element (24a) on the basis of its level or temperature information.

7. The sensor (10) according to one of claims 3 to 6,
wherein a first filter (28, 28a) and further filters (28a) form a stripe pattern or a check pattern.

8. The sensor (10) according to any of the preceding claims,
comprising a light transmitter (12) for transmitting transmitted light (14) in the wavelength range into the monitoring area (18).

9. The sensor (10) according to claim 8,
comprising a reference light receiver (34) having an optical reference filter (32) whose transmission range corresponds to that of the first filter (28, 28a) in order to obtain drift information as to how far the wavelength range of the transmitted light (14) has shifted due to drift.

10. The sensor (10) according to claim 9,
wherein the control and evaluation unit (30) is configured to control the wavelength range of the transmitted light (12) to be in the transmission range based on the drift information.

11. The sensor (10) according to any of claims 8 to 10,
wherein the light transmitter (12) has a temperature adjustment element (36) that can be used to change the wavelength range of the transmitted light (14).

12. The sensor (10) according to any of the preceding claims,
wherein the control and evaluation unit (30) is configured to determine a light time of flight of the transmitted light (14) transmitted by the light transmitter (12) and received again by the light receiver (24) from the monitoring area (18) as received light (22).

13. A method for detecting objects (20) in a monitored area (18), wherein a light receiver (24) having a plurality of avalanche photodiode elements (24a), each biased with a bias voltage above a breakdown voltage and thus operated in a Geiger mode, receives received light (22) from the monitored area (18) in a wavelength range through receiving optics (26, 28) having a first optical filter (28, 28a) tuned to the wavelength range, wherein information about the objects (20) is detected by evaluating (30) a received signal of the light receiver (24) and wherein the predetermined wavelength range shifts in a tolerance wavelength range, the tolerance wavelength range comprising the wavelength range subject to drift,
**characterized in that** the first filter (28, 28a) allows only received light (22) to pass in a transmission range which is narrower than the tolerance wavelength range, and **in that** the receiving optics (26, 28) have at least one further optical filter (28a) whose transmission range is narrower than the tolerance wavelength range and is different from the transmission range of the first filter.

## Revendications

1. Capteur optoélectronique (10) pour la détection d'objets (20) dans une zone à surveiller (18), qui, pour recevoir une lumière de réception (22) provenant de la zone à surveiller (18) dans une plage de longueurs d'onde, comprend un récepteur de lumière (24) ayant une pluralité d'éléments de photodiode à avalanche (24a) qui peuvent être polarisés chacun avec une tension de polarisation supérieure à une tension de claquage et peuvent ainsi fonctionner en mode Geiger, une optique de réception (26, 28) ayant un premier filtre optique (28, 28a) qui est accordé sur ladite plage de longueurs d'onde, ainsi qu'une unité de commande et d'évaluation (30), l'unité de commande et d'évaluation étant réalisée pour acquérir des informations relatives aux objets (20) à partir d'un signal de réception du récepteur de lumière (24), ladite plage de longueurs d'onde étant décalée dans une plage de longueurs d'onde de tolérance, ladite plage de longueurs d'onde de tolérance couvrant la plage de longueurs d'onde sujette à des dérives lors du fonctionnement du capteur (10), **caractérisé en ce que**
le premier filtre (28, 28a) présente une bande passante qui est plus étroite que la plage de longueurs d'onde de tolérance, et **en ce que** l'optique de réception (26, 28) présente au moins un autre filtre optique (28a) dont la bande passante est plus étroite que la plage de longueurs d'onde de tolérance et qui se distingue de la bande passante du premier filtre.

2. Capteur (10) selon la revendication 1, dans lequel
le premier filtre (28, 28a) est un filtre passe-bande à bande étroite.

3. Capteur (10) selon la revendication 1 ou 2, dans lequel
les bandes passantes des filtres (28a) couvrent dans leur ensemble la plage de longueurs d'onde de tolérance.

4. Capteur (10) selon la revendication 3, dans lequel
au moins un élément de photodiode à avalanche (24a) est associé à chacun des filtres (28a).

5. Capteur (10) selon la revendication 4, dans lequel
l'unité de commande et d'évaluation (30) est réalisée pour sélectionner le signal de réception dudit au moins un élément de photodiode à avalanche (24a) qui est associé au filtre (28a), dont la bande passante correspond à la plage de longueurs d'onde de la lumière de réception (22) dans les conditions de fonctionnement actuelles.

6. Capteur (10) selon la revendication 5, dans lequel
l'unité de commande et d'évaluation (30) sélectionne des signaux de réception dudit au moins un élément de photodiode à avalanche (24a) sur la base de son niveau ou d'une information de température.

7. Capteur (10) selon l'une des revendications 3 à 6, dans lequel
un premier filtre (28, 28a) et d'autres filtres (28a) forment un motif en bandes ou en carreaux.

8. Capteur (10) selon l'une des revendications précédentes,
comprenant un émetteur de lumière (12) pour émettre dans la zone à surveiller (18) une lumière d'émission (14) dans ladite plage de longueurs d'onde.

9. Capteur (10) selon la revendication 8,
comprenant un récepteur de lumière de référence (34) ayant un filtre optique de référence (32) dont la bande passante correspond à celle du premier filtre (28, 28a), afin d'obtenir une information de dérive pour savoir la mesure de laquelle la plage de longueurs d'onde de la lumière d'émission (14) s'est décalée à cause de dérives.

10. Capteur (10) selon la revendication 9, dans lequel
l'unité de commande et d'évaluation (30) est réalisée pour commander la plage de longueurs d'onde de la lumière d'émission (12) sur la base des informations de dérive dans la bande passante.

11. Capteur (10) selon l'une des revendications 8 à 10, dans lequel
l'émetteur de lumière (12) comporte un élément d'adaptation de température (36) permettant de modifier la plage de longueurs d'onde de la lumière d'émission (14).

12. Capteur (10) selon l'une des revendications précédentes, dans lequel
l'unité de commande et d'évaluation (30) étant réalisée pour déterminer un temps de parcours de la lumière (14) émise par l'émetteur de lumière (12) et reçue par le récepteur de lumière (24) depuis la zone à surveiller (18) en tant que lumière de réception (22).

13. Procédé de détection d'objets (20) dans une zone à surveiller (18),
dans lequel
un récepteur de lumière (24) ayant une pluralité d'éléments de photodiode à avalanche (24a), qui sont chacun polarisés avec une tension de polarisation supérieure à une tension de claquage et qui fonctionnent ainsi en mode Geiger, reçoit une lumière de réception (22) provenant de la zone à surveiller (18) dans une plage de longueurs d'onde par une optique de réception (26, 28) ayant un premier filtre optique (28, 28a) qui est accordé sur la plage de longueurs d'onde,
des informations relatives aux objets (20) sont acquises par évaluation (30) d'un signal de réception du récepteur de lumière (24), et
la plage de longueurs d'onde prédéterminée est décalée dans une plage de longueurs d'onde de tolérance, et
la plage de longueurs d'onde de tolérance couvre une plage de longueurs d'onde sujette à des dérives,
**caractérisé en ce que**
le premier filtre (28, 28a) ne laisse passer la lumière de réception (22) que dans une bande passante qui est plus étroite que la plage de longueurs d'onde de tolérance, et **en ce que**
l'optique de réception (26, 28) présente au moins un autre filtre optique (28a) dont la bande passante est plus étroite que la plage de longueurs d'onde de tolérance et se distingue de la bande passante du premier filtre.
